# EUROPEAN PATENT APPLICATION

(11) **EP 4 793 256 A1**
(43) Date of publication of application: **19.08.2026**
(21) Application number: 25157559.3
(22) Date of filing: 13.02.2025
(51) Int. Cl.: C04B 28/08, C04B 40/00

(54) **GLASS-BASED BINDER, FOR CONCRETE OR MORTAR, AND COMPOSITION FOR ACTIVATING THE SAME**

(71) Applicant: Ecocem Materials Limited, Dublin 3 D03E0C0 (IE); Institut National des Sciences Appliquées de Toulouse, 31400 Toulouse (FR); Université de Toulouse, 31400 Toulouse (FR); Centre d'Études et d'Expertise sur les Risques l'Environnement la Mobilité et l'Aménagement, 69003 Lyon (FR)
(72) Inventor: MILKI, Falak, 31400 TOULOUSE (FR); BLOTEVOGEL, Simon, 75012 PARIS (FR); IDIR, Rachida, 30520 SAINT-MARTIN-DE-VALGALGUES (FR); CYR, Martin, 31077 TOULOUSE CEDEX 4 (FR); WATTEZ, Thomas, 75012 PARIS (FR)
(74) Representative: Plasseraud IP

(57) **Abstract**

The invention concerns a composition for activating a glass-based binder comprising at least 50 dry wt% of glass particles, said glass particles having a d₅₀ equal to or less than 20µm, said composition comprising:
A- at least one alkaline carbonate,
B- at least one slag, and
C- at least one calcium source.

## Description

### Technical Field

This disclosure pertains to the field of concrete and mortar composition, recycled glass, in particular for its use as binder. More specifically, this disclosure concerns the use of finely ground glass waste for preparing industrial mortars composition or concrete compositions.

### Background Art

Supplementary cementitious materials (SCMs) and precursors for alkali activated cements are being increasingly used to replace, at least in part, ordinary Portland cement (OPC). Indeed, production of OPC has a strong and negative impact on the environment due to the emissions of large quantities of carbon dioxide.

The production of cement inherently generates CO₂ during the calcination of the raw materials at very high temperature (1450°C) in a kiln through decarbonation of the limestone.

In addition, carbon dioxide is released as a result of the combustion of the fossil fuels needed to heat the cement kiln. By adding the additional emissions of grinding, almost one ton of CO₂ per ton of Portland cement is obtained. Overall, the cement industry is responsible for about 7 to 9% of the global carbon dioxide emissions.

Waste glass is one of potential interesting SCM or interesting precursor for alkali activated cements. Indeed, a part of waste glass is not recycled, in particular, in France there are about 100 kt to 150 kt of waste glass that cannot be recycled in the traditional channels.

In a first alternative, waste glass can be ground to obtain glass granulate having a size of several millimeters that can be incorporated into concrete for aesthetic purposes, for instance.

In a second alternative, waste glass can be ground in finer particles to obtain a powder that can be used as a SCM or as a precursor for alkali activated cements. Indeed, waste glass powder is notoriously known to behave like a pozzolanic material when activated (form a solid product when mixed with water and lime or a strong alkali solution), but always displays a limited early age performance, which can impact the mechanical strength in the first 7 days and sometimes beyond. To illustrate this, documents FR 2 779 714 B1 and WO 00/44685 A1 can be cited.

As previously mentioned, glass-based binders present a low early age strength, typically less than 2 MPa, even less than 1MPa after 24 hours of curing.

One of the objectives of the present disclosure is to propose a binder comprising more than 50 wt% of glass particles, as precursor for alkali activated cements, presenting an acceptable early age strength, e.g. of at least about 5 MPa after 24 hours of curing.

Hence, the present disclosure aims at fulfilling at least one of the following objectives:
**-O1-** providing a composition for activated glass-based binder,
**-O2-** providing a binder comprising more than 50wt% of recycled glass,
**-O3-** providing a glass-based binder presenting a mechanical strength of at least about 5 MPa after 24 hours of curing,
**-O4-** providing a glass-based binder presenting a mechanical strength at 28 days similar to known cements as defined by EN 197-1, EN 197-5 and EN 197-6 .

### Summary of the invention

At least one of the above objectives is reached thanks to a composition for activating a glass-based binder comprising at least 50 dry wt% of glass particles, said glass particles having a d₅₀ equal to or less than 20 µm, typically around 4.5 µm, said composition comprising:
A- at least one alkaline carbonate,
B- at least one slag, and
C- at least one calcium source,
wherein the dry weight ratio A/B is of at least 0.15, the dry weight ratio C/A is of at least 0.5 and the dry weight ratio C/B is of at least 0.10.

The invention also concerns the use of the above mentioned composition for activating glass particles having a d₅₀ equal to or less than 20 µm, typically around 4.5 µm.

In another aspect, it is proposed a wet industrial mortar formulation or wet concrete mortar formulation comprising
A- at least one alkaline carbonate,
B- at least one slag, and
C- at least one calcium source,
D- a glass-based binder comprising at least 50 dry wt% of glass particles, said glass particles having a d₅₀ equal to or less than 20µm, typically around 4.5 µm,

aggregates and water,
wherein the dry weight ratio A/B is of at least 0.15, the dry weight ratio C/A is of at least 0.5 and the dry weight ratio C/B is of at least 0.10,
the weight ratio weight of water to sum of weight of components A, B, C and D being between 0.2 and 0.45.

It is also proposed a hardened industrial mortar product or hardened concrete product obtained from the wet industrial mortar formulation or wet concrete formulation mentioned above.

The invention further concerns a process for preparing the wet industrial mortar formulation or wet concrete formulation mentioned above, comprising a step of mixing with water, at least one aggregate and components A, B, C and D.

### General definitions

According to the terminology of this text, the following non-limitative definitions have to be taken into consideration:

"binder" refers to "hydraulic binder" meaning any material that hardens just by adding water, like cement.

"cement" is understood as meaning a powdery substance made for use in making mortar or concrete. They are mineral binders, possibly free from any organic compound. It refers to any ordinary cements as defined by EN 197-1, EN 197-5 and EN 197-6.

precursor for alkali activated cements is understood as any silicate containing material powder that hardens in the presence of an alkaline activator.....

"clinker" is understood as the main constituent phase of Ordinary Portland Cement obtained from the co-calcination of limestone and an aluminosilicate source.

"mortar" and "concrete" refers to a material composed of binder(s), aggregates such as sand and other components, like admixtures.

"Dry industrial mortar composition or dry concrete composition" refers to a material composed of binder(s), aggregates such as sand and gravel and other components, like admixtures.

"Wet industrial mortar formulation or wet concrete formulation" refers to a material composed of binder(s), aggregates such as sand and gravel and other components, like admixtures and water.

"Hardened industrial mortar product or hardened concrete product" refers to the hardened product obtained from wet industrial mortar composition after reaction and evaporation of the water.

"d₅₀" gives the median size of the granulometric distribution of material's particles (usually in micrometers for cementation materials). It means that 50% of the particles have a size less than the d₅₀ number and 50% of the particles have a size greater than the d₅₀ number. The measurement of d₅₀ is done by Laser diffraction analysis, also known as Laser diffraction spectroscopy, by means of Laser diffraction analyzer such as CILAS 1090LD" and commercialized by the CILAS company, with the wet method. Unless contrary indicated, d₅₀ is given on a volume basis.

### Detailed description of the invention

### The activating composition

The invention firstly concerns an activating composition, more specifically a composition for activating a glass-based binder. As previously mentioned, finely grounded glass can act as a precursor for alkali activated cements, however with a substantial drawback, namely the very low mechanical strength at early age (less than one day of curing).

The activating composition, detailed below, is particularly designed for activating glass-based binder, nevertheless the activating composition according to the invention may potentially be used for activating other precursors for alkali activated cements.

As illustrated in the examples below, the composition for activating binder comprising glass particles presenting a d50 equal to or less than 20µm allows to obtain a mechanical strength of at least about 5 MPa after 1 day.

### The glass-based binder

The glass-based binder comprises at least 50 wt% of glass particles. In some embodiments the glass-based binder may comprise at least 60 wt% of glass particles, or at least 70 wt% of glass particles, or at least 80 wt% of glass particles, or at least 90 wt% of glass particles, or even 100 wt% of glass particles.

Typically, glass is selected in the group comprising, preferably consisting of, soda-lime glass, glass making dusts, boro-silicate glass, cathode ray tube glass, lead glass, flat glass, container glass, glass cullet.

So as to act as a precursor for alkali activated cements, glass has to be ground in fine particles, generally the ground glass presents a d₅₀ to or less than 20 µm, preferably the d50 is between 18 µm and 2 µm, more preferably between 15 µm and 4 µm, and even more preferably equal to about 4.5 µm.

The glass-based binder is advantageously enriched with one or several other components which are ingredients, notably functional additives preferably selected in the following list:

### • Water retention agent.

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

### • Rheological agent

The possible rheological agent (also named a "thickener") is preferably chosen in the group comprising, more preferably consisting in: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

### • Defoamer/Antifoams

The possible defoamer is preferably chosen in the group comprising, more preferably consisting in: polyether polyols and mixes thereof.

### • Biocide

The possible biocide is preferably chosen in the group comprising, more preferably consisting in: mineral oxides like zinc oxide and mixes thereof.

### • Pigment

The possible pigment is preferably chosen in the group comprising, more preferably consisting in: TiO₂, iron oxide and mixes thereof.

### • Flame retardant

Flame retardant (or flame proof agent) makes it possible to increase the fire resistance and/or to shrink the speed of flame spreading of the composition.

### • Air-entraining agents

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

### • Retarders

Retarders are advantageously chosen in the group comprising, more preferably consisting in tartric acid and its salts: sodium or potassium salts, citric acid and its salts: sodium (trisodic citrate) and their mixes.

In addition, other components may be:
- *Plasticizers*
- *Fibres*
- *Dispersion powders*
- *Wetting agents*
- *Polymeric resins*
- *Complexing agents*
- *Drying shrinkage reducing agents based on polyols*
- *Lubricants.*
The total content of these optional other components in the binder composition is preferably comprised between 0,001% and 10% by weight of the total weight of the binder composition.

### The alkaline carbonate

The composition according to the invention comprises at least one alkaline carbonate as component A.

In preferred embodiments, the alkaline carbonate is in anhydrous or hydrous mineral form and is selected in the group comprising, preferably consisting of, sodium carbonate, potassium carbonate, lithium carbonate, cesium carbonate and mixtures thereof.

### The slag

The composition according to the invention comprises at least one slag as component B.

In preferred embodiments, the slag is selected in the group comprising, preferably consisting of, ground granulated blast furnace slag, Basic Oxygen Furnace slag, Electric Arc Furnace slag, granulated Electric Arc Furnace slag, Ladle furnace slag, Reducing Electric Furnace slag, copper slag, ferro-chrome slag, ferro-manganese slag, phosphorus slag and mixtures and engineered variants thereof.

### The calcium source

The composition according to the invention comprises at least one calcium source as component C.

In preferred embodiments, the calcium source is selected in the group comprising, slaked lime, quick lime, hydrated lime, supersulfated cements, calcium aluminate cements, calcium sulfoaluminate cements, Portland cements as defined by EN 197-1, EN 197-5 and EN 197-6, Portland ground clinkers, cement kiln dusts, red mud, gypsum, anhydrite, basanite, belitic cements and mixtures thereof

### The weight ratios

To optimize the efficiency of the composition for activating glass-based binder according to the invention, it is preferable that the following dry weight ratios are met.

According to the invention, the dry weight ratio A/B is of at least 0.15. In preferred embodiments, the dry weight ratio A/B is of at least 0.16, more preferably the dry weight ratio A/B is of at least 0.17.

According to the invention, the dry weight ratio C/A is of at least 0.5. In preferred embodiments, the dry weight ratio C/A is of at least 0.6, more preferably the dry weight ratio C/A is of at least 0.7.

According to the invention, the dry weight ratio C/B is of at least 0.10. In preferred embodiments, the dry weight ratio C/B is of at least 0.17, more preferably the dry weight ratio C/B is of at least 0.19.

### Optional components

The composition according to the invention may further comprise at least one chelatant, preferably selected in the group comprising, preferably consisting of, compounds bearing one or more of the following functions, eventually in a from of a salt, monophosphonates, diphosphonates, phosphates, carboxylates such as polyacrylates, citrates, tartrates, gluconates; amines, and mixtures thereof.

In an embodiment, the chelatant is selected in the group comprising, preferably consisting of, PBTC (phosphonobutane-1,2,4-tricarboxylic acid), ATMP (amino-trimethylene phosphonic acid), HEDP (1-hydroxyethylidene-1,1-diphosphonic acid), DTPA (diethylenetriaminopenta-acetic acid), DCTA (diaminocyclohexanetetra-acetic acid), PAA (polyacrylic acid), PPCA (phosphino-polyacrylates), PMA (polymaleic acids), MAT (maleic acid terpolymers), SPOCA (sulfonated phosphonocarboxylic acid), PPCA (Poly-Phosphono Carboxylic acid), EDTMP (ethylenediamine-tris[methylene phosphonic acid]) and DTPMP (Diethylenetriamine-penta[methylene phosphonic acid]), and mixtures thereof.

Advantageously in the composition according to the invention, said chelatant is present in a proportion of between 0.05 weight % and 1.5 weight %, relative to the total weight of components A, B and C.

The composition according to the invention may further comprise at least one accelerator, said accelerator being preferably selected from the group comprising, preferably consisting of, alkaline bi-carbonates, triethanolamine (TEA), triisopropanolamine (TIPA), trisodium nitrilotriacetate (NTA), tetra potassium pyrophosphate (TKPP), 2,3-dihydroxynapthalene (DHNP), and mixtures thereof

Advantageously in the composition according to the invention, said accelerator is present in a proportion of between 0.05 weight % and 2.5 weight %, relative to the total weight of components A, B and C.

The total content of these optional other components is preferably comprised between 0.1% and 10% by weight of the total sum of weight of components A, B, C and D.

### The use of the composition according to the invention

The invention also concerns the use of a composition comprising:
A- at least one alkaline carbonate,
B- at least one slag, and
C- at least one calcium source,

wherein the dry weight ratio A/B is of at least 0.15, the dry weight ratio C/A is of at least 0.5 and the dry weight ratio C/B is of at least 0.10,
for activating glass particles having a d₅₀ equal to or less than 20 µm, typically around 4.5 µm.

The alkaline carbonate, the slag, the calcium source and the glass particles are defined as set forth above.

Although the composition allows to activate glass particles in any ratios, the composition is particularly efficient when the dry weight ratio composition to glass particles is between 0.2 and 0.75.

In preferred embodiments, the dry weight ratio composition to glass particles is between 0.25 and 0.70, preferably between 0.15 and 0.35, more preferably between 0.2 and 0.3.

### The wet industrial mortars or concrete formulation

In another aspect, it is proposed a wet industrial mortar formulation or wet concrete mortar formulation comprising
A- at least one alkaline carbonate,
B- at least one slag, and
C- at least one calcium source,
D- a glass-based binder comprising at least 50 dry wt% of glass particles, said glass particles having a d₅₀ equal to or less than 20µm, typically around 4.5 µm,

aggregates and water,
wherein the dry weight ratio A/B is of at least 0.15, the dry weight ratio C/A is of at least 0.5 and the dry weight ratio C/B is of at least 0.10,
the weight ratio weight of water to sum of weight of components A, B, C and D being between 0.2 and 0.45.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry building material composition can also include, apart from aggregates, one or several ingredients, especially functional admixtures, additions and fibres, which can be the same as the other optional component mentioned above defined in the detailed description of the binder composition.

### The hardened industrial mortars or concrete product

It is also proposed a hardened industrial mortar product or hardened concrete product obtained from the wet industrial mortar formulation or wet concrete formulation mentioned above.

### The process for preparing the wet industrial mortars or concrete formulation

The invention further concerns a process for preparing the wet industrial mortar formulation or wet concrete formulation mentioned above, comprising a step of mixing with water, at least one aggregate and components A, B, C and D.

A composition of components A, B, C and D may be prepared before the mixing step or in situ during the mixing step the different components A, B, C and D being taken separately and/or under the form of premix(es), and at least one aggregate.

In other words, wet industrial mortar formulation or wet concrete formulation could be prepared by two distinct methods.

In a first method, the components A, B, C and D are mixed in a dry form, and then mixed with the at least one aggregate and with other optional components, and thereafter mixed with water.

In a second method, the wet industrial mortar formulation or wet concrete formulation is prepared by mixing in water each component A, B, C, D, optional components and the aggregates.

According to the present disclosure, the term "mixing" must be understood as any form of mixing.

In a preferred embodiment a part of the components A, B, C and D and at least a part of the water are mixed prior to the mixing with the aggregate.

In a preferred embodiment, the process is implemented with a weight ratio weight of water to sum of weight of components A, B, C and D being between 0.3 and 0.4.

### Examples

### Example 1: the synergistic effect of the dry weight ratios

Four dry compositions have been prepared by mixing the components listed in Table 1 below, compositions CE1, CE2 and CE3 are outside the invention, while composition E1 is according to the invention:

**[Table 1]**

| | E1 | CE1 | CE2 | CE3 |
|---|---|---|---|---|
| Component A (Na₂CO₃) (dry weight %) | 7.5 | 7.5 | 6.5 | 5 |
| Component B (Ground Granulated Blast Furnace Slag) (dry weight %) | 26 | 0 | 15.25 | 30 |
| Component C (CEM I 52.5R) (dry weight %) | 6 | 6 | 3 | 3 |
| Dry weight ratio A/B | 0.29 | N/A | 0.43 | 0.17 |
| Dry weight ratio C/A | 0.8 | 0.8 | 0.46 | 0.6 |
| Dry weight ratio C/B | 0.23 | N/A | 0.20 | 0.1 |

These four compositions have then been mixed with water, a glass binder consisting of glass particles having a d₅₀ of 4.5 µm and a phosphonate in the proportion given in table 2 below so as to form wet formulations WE1, WCE1, WCE2 and WCE3:

**[Table 2]**

| | WE1 | WCE1 | WCE2 | WCE3 |
|---|---|---|---|---|
| E1 (dry weight %) | 39.5 | 0 | 0 | 0 |
| CE1 (dry weight %) | 0 | 13.5 | 0 | 0 |
| CE2 (dry weight %) | 0 | 0 | 24.75 | 0 |
| CE3 (dry weight %) | 0 | 0 | 0 | 38.0 |
| Component D Glass particles (dry weight %) | 60.5 | 86.5 | 75.25 | 62.0 |
| Phosphonate (dry weight % relative to components A to D) | 0.25 | 0.25 | 0.25 | 0.25 |
| Weight ratio Water to components A to D | 0.35 | 0.35 | 0.35 | 0.35 |

These formulations have then been let hardened. The compressive strengths of the hardened product HE1; HCE1, HCE2 and HCE3 have been determined according to standard NF EN 196-1, they are set forth in table 3 below:

**[Table 3]**

| | HE1 | HCE1 | HCE2 | HCE3 |
|---|---|---|---|---|
| Compressive strength after 1 day (MPa) | 13.0 | 1.7 | 1.3 | 0.7 |
| Compressive strength after 2 day (MPa) | 18.2 | 2.1 | 4.3 | 7.5 |
| Compressive strength after 28 day (MPa) | 44.4 | 26.5 | 43.0 | 43.0 |

It can be seen that only the composition according to the invention (E1) allows to reach a compressive strength of at least 5 Mpa after 1 day (HE1), while increasing (HCE1) or maintaining a comparable compressive strength at 28 days (HCE2 and HCE3).

### Example 2: varying the dry weight ratios in compositions according to the invention

The same protocols as in example 1 have been followed. Eleven compositions (E2 to E12), according to the invention, have been prepared. The compositions and the compressive strength are set forth in table 4 below:

**[Table 4]**

| | | E2 | E3 | E4 | E5 | E6 | E7 | E8 | E9 | E10 | E11 | E12 | E13 |
|---|---|---|---|---|---|---|---|---|---|---|---|---|---|
| Composition according to the invention | Component A (Na₂CO₃) (dry weight %) | 7.6 | 6.7 | 5.0 | 7.6 | 7.5 | 5.2 | 6.7 | 5.8 | 7.5 | 7.6 | 7.5 | 6.5 |
| | Component B (Ground Granulated Blast Furnace Slag) (dry weight %) | 8.7 | 7.8 | 28.7 | 12.9 | 13.3 | 21.0 | 16.5 | 25.2 | 23.5 | 17.4 | 23.5 | 29.3 |
| | Component C (CEM I 52.5R) (dry weight %) | 6.0 | 9.0 | 6.3 | 6.1 | 6.0 | 6.0 | 9.0 | 9.0 | 9.0 | 6.0 | 9.0 | 4.2 |
| | | | | | | | | | | | | | |
| | Dry weight ratio A/B | 0.87 | 0.86 | 0.17 | 0.59 | 0.56 | 0.25 | 0.41 | 0.23 | 0.32 | 0.44 | 0.32 | 0.22 |
| | Dry weight ratio C/A | 0.79 | 1.34 | 1.26 | 0.79 | 0.8 | 1.15 | 1.34 | 1.55 | 1.2 | 0.79 | 1.2 | 0.6 |
| | Dry weight ratio C/B | 0.69 | 1.15 | 0.22 | 0.47 | 0.45 | 0.29 | 0.54 | 0.36 | 0.38 | 0.34 | 0.38 | 0.14 |
| | | | | | | | | | | | | | |
| Component D Glass particles (dry weight %) | | 77.7 | 76.5 | 60.0 | 73.4 | 73.2 | 67.8 | 67.8 | 60.0 | 60.0 | 69.0 | 60.0 | 60 |
| Phosphonate (dry weight % relative to components A to D) | | 0.25 | 0.25 | 0.25 | 0.25 | 0.25 | 0 | 0.25 | 0.25 | 0.25 | 0.25 | 0.25 | 0.25 |
| Weight ratio Water to components A to D | | 0.35 | 0.35 | 0.35 | 0.35 | 0.35 | 0.4 | 0.35 | 0.35 | 0.35 | 0.35 | 0.35 | 0.35 |
| | | | | | | | | | | | | | |
| Compressive strength after 1 day (MPa) | | 5.7 | 6.2 | 6.3 | 6.3 | 6.9 | 7.5 | 7.7 | 8.3 | 10.2 | 10.4 | 11.7 | 5.0 |
| Compressive strength after 2 day (MPa) | | 8.6 | 9.0 | 11.9 | 11.9 | 12.2 | 11.1 | 11.2 | 11.6 | 13.7 | 15.6 | 14.5 | 13.5 |
| Compressive strength after 28 day (MPa) | | 45.1 | 42.0 | 35.7 | 51.5 | 50.8 | 34.9 | 40.6 | 32.8 | 39.2 | 53.4 | 37.2 | 44.1 |

As can be seen from table 4, each composition according to the invention (E2 to E13) allows to reach a compressive strength of at least 5 MPa after 1 day while maintaining compressive strength at 28 days above 32.5 MPa.

### Example 3: effect of the phosphonate

The same protocols as in example 1 have been followed. Two compositions (E14 to E15), according to the invention, have been prepared. The compositions and the compressive strength are set forth in table 5 below:

**[Table 5]**

| | | E14 | E15 |
|---|---|---|---|
| Composition according to the invention | Component A (Na₂CO₃) (dry weight %) | 5.0 | 5.0 |
| | Component B (Ground Granulated Blast Furnace Slag) (dry weight %) | 21.0 | 21.0 |
| | Component C (CEM I 52.5R) (dry weight %) | 6.0 | 6.0 |
| | | | |
| | Dry weight ratio A/B | 0.24 | 0.24 |
| | Dry weight ratio C/A | 1.2 | 1.2 |
| | Dry weight ratio C/B | 0.29 | 0.29 |
| | | | |
| Component D Glass particles (dry weight %) | | 68.0 | 68.0 |
| Phosphonate (dry weight % relative to components A to D) | | 0 | 0.25 |
| Weight ratio Water to components A to D | | 0.4 | 0.35 |
| | | | |
| Compressive strength after 1 day (MPa) | | 7.1 | 9.8 |
| Compressive strength after 2 day (MPa) | | 11 | 12.2 |
| Compressive strength after 28 day (MPa) | | 35.8 | 38.3 |

As can be seen from table 5, the phosphonate allows increasing the compressive strength.

## Claims

1. Composition for activating a glass-based binder comprising at least 50 dry wt% of glass particles, said glass particles having a d₅₀ equal to or less than 20µm, typically around 4.5 µm, said composition comprising:
A- at least one alkaline carbonate,
B- at least one slag, and
C- at least one calcium source,
wherein the dry weight ratio A/B is of at least 0.15, the dry weight ratio C/A is of at least 0.5 and the dry weight ratio C/B is of at least 0.10.

2. Composition according to claim 1, wherein glass is selected in the group comprising, preferably consisting of, soda-lime glass, glass making dusts, boro-silicate glass, cathode ray tube glass, lead glass, flat glass, container glass, glass cullet.

3. Composition according to any one of claims 1 to 2, wherein the alkaline carbonate is in anhydrous or hydrous mineral form and is selected in the group comprising, preferably consisting of, sodium carbonate, potassium carbonate, lithium carbonate, cesium carbonate and mixtures thereof.

4. Composition according to any one of claims 1 to 3, wherein the slag is selected in the group comprising, preferably consisting of, ground granulated blast furnace slag, Basic Oxygen Furnace slag, Electric Arc Furnace slag, granulated Electric Arc Furnace slag, Ladle slag, Reducing Electric Furnace slag, copper slag, ferro-chrome slag, ferro-manganese slag, phosphorus slag and mixtures and engineered variants thereof.

5. Composition according to any one of claims 1 to 4, wherein the calcium source is selected in the group comprising, slaked lime, quick lime, hydrated lime, supersulfated cements, calcium aluminate cements, calcium sulfoaluminate cements, cements as defined by EN 197-1, EN 197-5 and EN 197-6, Portland ground clinkers, cement kiln dusts, red mud, gypsum, anhydrite, basanite, belitic cements and mixtures thereof.

6. Composition according to any one of claims 1 to 5, **characterized in that** it further comprises at least one chelatant, preferably selected in the group comprising, preferably consisting of, compounds bearing one or more of the following functions, eventually in a from of a salt, monophosphonates, diphosphonates, phosphates, carboxylates such as polyacrylates, citrates, tartrates, gluconates; amines, and mixtures thereof.

7. Composition according to claim 6, wherein the chelatant is selected in the group comprising, preferably consisting of, PBTC (phosphonobutane-1,2,4-tricarboxylic acid), ATMP (amino-trimethylene phosphonic acid), HEDP (1-hydroxyethylidene-1,1-diphosphonic acid), DTPA (diethylenetriaminopenta-acetic acid), DCTA (diaminocyclohexanetetra-acetic acid), PAA (polyacrylic acid), PPCA (phosphino-polyacrylates), PMA (polymaleic acids), MAT (maleic acid terpolymers), SPOCA (sulfonated phosphonocarboxylic acid), PPCA (Poly-Phosphono Carboxylic acid), EDTMP (ethylenediamine-tris[methylene phosphonic acid]) and DTPMP (Diethylenetriaminepenta[methylene phosphonic acid]), and mixtures thereof.

8. Composition according to any one of claims 6 to 7, wherein said chelatant is present in a proportion of between 0.05 weight % and 1.5 weight %, relative to the total weight of components A, B and C.

9. Composition according to any one of claims 1 to 8, **characterized in that** it further comprises at least one accelerator, said accelerator being preferably selected from the group comprising, preferably consisting of, alkaline bi-carbonates, triethanolamine (TEA), triisopropanolamine (TIPA), trisodium nitrilotriacetate (NTA), tetra potassium pyrophosphate (TKPP), 2,3-dihydroxynapthalene (DHNP), and mixtures thereof.

10. Composition according to claim 9, wherein said accelerator is present in a proportion of between 0.05 weight % and 2.5 weight %, relative to the total weight of components A, B and C.

11. Use of a composition comprising:
A- at least one alkaline carbonate,
B- at least one slag, and
C- at least one calcium source,
wherein the dry weight ratio A/B is of at least 0.15, the dry weight ratio C/A is of at least 0.5 and the dry weight ratio C/B is of at least 0.10,
for activating glass particles having a d₅₀ equal to or less than 20 µm, typically around 4.5 µm.

12. Use according to claim 11, wherein the dry weight ratio composition to glass particles is between 0.2 and 0.75.

13. Wet industrial mortar formulation or wet concrete mortar formulation comprising
A- at least one alkaline carbonate,
B- at least one slag, and
C- at least one calcium source,
D- a glass-based binder comprising at least 50 dry wt% of glass particles, said glass particles having a d₅₀ equal to or less than 20µm, typically around 4.5 µm,
aggregates and water,
wherein the dry weight ratio A/B is of at least 0.15, the dry weight ratio C/A is of at least 0.5 and the dry weight ratio C/B is of at least 0.10,
the weight ratio weight of water to sum of weight of components A, B, C and D being between 0.2 and 0.45.

14. Hardened industrial mortar product or hardened concrete product obtained from the wet industrial mortar formulation or wet concrete formulation according to claim 13.

15. Process for preparing the wet industrial mortar formulation or wet concrete formulation according to claim 13 comprising a step of mixing with water, at least one aggregate and components A, B, C and D.
